# EUROPÄISCHE PATENTSCHRIFT

(11) **EP 0 841 542 B1**
(45) Veröffentlichungstag und Bekanntmachung des Hinweises auf die Patenterteilung: **01.10.2003**
(21) Anmeldenummer: 97119388.3
(22) Anmeldetag: 06.11.1997
(51) Int. Cl.: G01D 13/02, G12B 11/02, B60Q 3/04, G01P 1/08

(54) **Anzeigeinstrument**
Indicating instrument
Dispositif d'affichage

(30) Priorität: 06.11.1996 DE 19645674
(43) Veröffentlichungstag der Anmeldung: 13.05.1998
(73) Patentinhaber: Siemens Aktiengesellschaft, 80333 München (DE)
(72) Erfinder: Simon, Ernst-Ulrich, 61440 Oberursel (DE); Kolibius, Hans, 64832 Babenhausen (DE); Zech, Stephan, 65343 Eltville (DE)

(56) Entgegenhaltungen:
- EP-A- 0 382 880
- EP-A- 0 678 734
- DE-A- 2 021 804
- GB-A- 1 453 222
- US-A- 3 005 951

## Beschreibung

Die Erfindung betrifft ein Anzeigeinstrument, insbesondere für Fahrzeuge, mit einem Gehäuse und mit einem Zifferblatt, das eine durch plastische Verformung erzeugte Wölbung aufweist.

Anzeigeinstrumente mit derartigen Zifferblättern sind bekannt. Zifferblätter mit einer leichten Wölbung, auch Bombierung genannt, zu versehen, kann aus verschiedenen Gründen erwünscht sein: Zum einen kann die Wölbung eine andernfalls zusätzlich notwendige Blende ersetzen, zum anderen bieten gewölbte Zifferblätter wesentlich ansprechendere Gestaltungsmöglichkeiten.

Es ist ein in einem Gehäuse angeordnetes Meßinstrument mit einer Skalenplatte bekannt, wobei an die Skalenplatte eine Blende, ein einziges Bauteil bildend, angeformt ist. Dieses Bauteil kann aus einem durch Stanzen und Biegen geformten Blechteil bestehen. Dadurch wird nicht nur ein zusätzliches Blendenbauteil überflüssig, sondern es wird auch eine Farbgleichheit von Skalenplatte und Blende gewährleistet.

Ebenfalls bekannt ist eine Zifferblattanordnung für ein Kombinationsinstrument, die aus mehreren, miteinander verbundenen Einzelzifferblättern besteht. Ziel dieses Gegenstands ist es, eine Bombierung von miteinander verbundenen Einzelzifferblättern zu ermöglichen, ohne daß ein vorher aufgebrachter Aufdruck verzerrt wird.

Ferner sind Kombinationsinstrumente mit einem als Systemträger oder Mittelgehäuse ausgeführten, tragenden Bauteil bekannt. Ein solches Kombinationsinstrument faßt in einem weitgehend modularen Aufbau mehrere Einzelinstrumente samt Gehäuse und weiteren Zubehörteilen zusammen. Je nach Kundenwunsch ist dabei sowohl die Instrumentierung an sich als auch die technische und optische Gestaltung derselben (Meßwerke, Rahmen, Zifferblätter, etc.) in weiten Grenzen zu variieren. Ein solches Kombinationsinstrument ist mit einem u.a. mit Lichtschächten zur Lichtleitung versehenen Mittelgehäuse ausgestattet, das rückwärtig Meßwerke und eine Leiterplatte trägt und mit einem Verschlußdeckel versehen ist. An der einem Beobachter zugewandten Vorderseite des Mittelgehäuses ist ein Zifferblatt mit Zeigern angeordnet. Ein Frontrahmen mit einem Deckglas bildet den vorderseitigen Abschluß des Kombinationsinstrumentes.

Bei den aus dem Stand der Technik bekannten gewölbten/bombierten Zifferblättern besteht das Problem, daß eine Aufrechterhaltung ihrer Formgebung ohne weitere Maßnahmen nicht gewährleistet ist. Diese Zifferblätter, bestehend aus Blech oder Kunststoffmaterial, haben, insbesondere bei geringer Materialstärke, unter Einfluß höherer Temperaturen, wie sie in Innenräumen von Fahrzeugen unter Sonneneinwirkung typischerweise auftreten, und/oder über einen längeren Zeitraum (Abbau von Verformungsspannungen), das Bestreben, sich rückzuverformen. Dieses Verhalten führt nicht nur zu einer nachhaltigen Schädigung des optischen Gesamteindrucks eines solchen Anzeigeinstruments, sondern auch zu einer Gefahr dauerhafter oder zeitweiser Funktionsstörungen, wenn durch solche Rückverformungen etwa Zeiger verklemmt und an einer Bewegung gehindert werden oder Lichtübertritte zwischen benachbarten Bereichen aufgrund einer nicht mehr vorhandenen Auflage des Zifferblatts auf dem Mittelgehäuse erfolgen.

Um der Gefahr einer Rückverformung vorzubeugen, ist es üblich, bombierte Zifferblätter zur Aufrechterhaltung der Formgebung zu hinterspritzen bzw. zu unterschäumen. Dieses Verfahren ist jedoch sehr aufwendig und kostenintensiv.

Um hier Abhilfe zu schaffen, ist es Aufgabe der vorliegenden Erfindung, ein Anzeigeinstrument mit einem Zifferblatt der genannten Art so zu gestalten, daß eine Rückverformung gewölbter Zifferblätter sicher ausgeschlossen ist.

Gelöst wird die Aufgabe bei einem Anzeigeinstrument der genannten Art dadurch, daß das Zifferblatt mit seiner dem Beobachter abgewandten Seite an einem entsprechend der Form des Zifferblattes ausgebildeten Formbauteil in Anlage ist, wobei das Zifferblatt an einer oder mehreren Verbindungsstellen mit dem Formbauteil verbunden ist. Ein erfindungsgemäßes Instrument bietet neben einer auch bei hohen Temperatur- und/oder Luftfeuchtigkeitsschwankungen sicheren und von dem Alter des Instruments unabhängigen Formhaltung des Zifferblatts eine sehr einfache maschinelle Herstellbarkeit desselben.

Das Zifferblatt kann dabei ein einziges Einzelzifferblatt oder mehrere miteinander verbundene Einzelzifferblätter, z.B. zum Einsatz in einem Kombinationsinstrument, aufweisen. In bestimmten Einsatzfällen kann es vorteilhaft sein, daß nicht alle miteinander verbundenen Einzelzifferblätter eine Wölbung aufweisen, sondern daß mindestens eines der mehreren Einzelzifferblätter eine Wölbung aufweist.

Insbesondere auch unter optischen Gesichtspunkten besteht das Zifferblatt vorteilhaft zumindest teilweise aus Metall. Je nach Fertigungsverfahren und Verwendungszweck kann es aber auch günstig sein, wenn das Zifferblatt aus Kunststoff besteht. In beiden Fällen ist es z. B. möglich, durch Aus- oder Anformungen sowie beliebige Lackierungen und Drucke das Zifferblatt zu gestalten. Insbesondere in aggressiver gasförmiger Umgebung, unter Einfluß von UV-Licht oder hohen Temperaturen kann es sinnvoll sein, das Zifferblatt mit einer Schutzlackierung zu versehen.

In bevorzugter Weise ist das Formbauteil ein Lichtleiter, wobei es auch nützlich sein kann, daß das Formbauteil ein Verbundbauteil ist, das nur in Teilbereichen ein Lichtleiter ist und so einem Lichtaustritt an unerwünschter Stelle vorbeugt. In beiden Fällen kann das Formbauteil dazu dienen, das Zifferblatt in ansprechender Weise von hinten zu durchleuchten und/oder zusätzlich Licht in eine Zeigerwelle eines vor dem Zifferblatt angeordneten, beleuchtbaren Zeigers einzuleiten.

Vorzugsweise überdeckt das Formbauteil das Zifferblatt ganz oder weitgehend. Es kann jedoch auch hinreichend sein, wenn das Formbauteil das Zifferblatt in wenigen Teilbereichen überdeckt. Insbesondere kann es ausreichen, wenn das Formbauteil das Zifferblatt in den Bereichen überdeckt, in denen das Zifferblatt aus einer Ebene in eine andere Ebene verformt ist. Der Materialeinsatz wird so vermindert und das Gewicht des Instruments verringert.

In einer besonders einfachen Ausführungsform ist das Formbauteil flächig geschlossen. Jedoch kann es vorteilhaft sein, daß das Formbauteil netzartig durchbrochen ist, um eine Gewichtsreduzierung und einen geringen Ausgangsmaterialeinsatz zu erreichen.

Vorzugsweise ist beobachterseitig vor dem Zifferblatt ein Deckglas zum Schutz des Anzeigeinstruments angeordnet. Wie oben bereits angedeutet, ist das Zifferblatt vorteilhaft zumindest partiell durchleuchtbar. Bei Dunkelheit der Umgebung ist so eine blendfreie und als angenehm empfundene Beleuchtung des Instruments möglich.

In bevorzugter Weise weist das Anzeigeinstrument ein Mittelgehäuse und einen Frontrahmen auf, wobei das Zifferblatt vorzugsweise zwischen dem Mittelgehäuse und dem Frontrahmen besonders einfach klemmend befestigt ist. Da es auch üblich ist, in dem Mittelgehäuse schachtförmige Ausnehmungen vorzusehen, die der Weiterleitung von Licht dienen, das von einer auf einer Seite des Mittelgehäuses auf einer Leiterplatte angeordneten Lichtquelle ausgesandt wird, ist es besonders günstig, das Mittelgehäuse lichtundurchlässig und - zur besseren Lichtleitung - weiß auszuführen. Die Lichtschächte können dabei konisch ausgebildet sein und eine ebene Grundfläche aufweisen. Damit kann sowohl eine vereinfachte Fertigung und verbesserte Lichtleitung als auch eine bessere Lichtausbeute erzielt werden. Vorteilhaft sind das Mittelgehäuse und der Frontrahmen herstellungs- und montagevereinfachend ein einziges Bauteil bildend miteinander verbunden. Auch kann es entsprechend günstig sein, wenn das Mittelgehäuse und das Formbauteil ein einziges Bauteil bildend miteinander verbunden sind. Unter optischen und funktionalen Gesichtspunkten ist es denkbar, Teilbereiche - z. B. Lichtschächte zur verbesserten Lichtführung mit weißer Farbe - zu lackieren.

Von besonderem Vorteil und den Zusammenbau vereinfachend ist es, wenn das Zifferblatt mit dem Gehäuse oder Mittelgehäuse und/oder mit dem Formbauteil zumindest punktuell verklebt oder verschweißt ist. Es kann hierfür ausreichend sein, die Verbindung nur an einigen Stellen und mit kurzen Abschnitten eines Doppelklebebands oder wenigen Schweißpunkten zu verwirklichen. Aufwendiger, jedoch mehr gestalterische Freiheit bietend ist es, wenn das Zifferblatt mit Befestigungselementen an den Verbindungsstellen gehalten ist. Das Zifferblatt kann dann an das Formbauteil und/oder an das Gehäuse oder Mittelgehäuse z. B. angenietet und/oder angeschraubt sein. Vorstellbar und in einfacher und vorteilhafter Weise auszuführen ist es aber auch, daß das Zifferblatt mittels zumindest eines an dem Formbauteil ausgebildeten Hakenelementes formschlüssig an dem Formbauteil gehalten wird. Ist das Formbauteil ein Lichtleiter, so ist es vorteilhaft, wenn das Zifferblatt mittels eines eingesetzten Haltebauteiles form- und/oder kraftschlüssig an dem Formbauteil gehalten wird, so daß keine unerwünschten Lichtdurchtritte durch das Zifferblatt entstehen und auch zum Beispiel Lichthöfe in der Nähe des Durchtritts einer Zeigerwelle durch das Zifferblatt vermieden werden. Für Montage und Demontage (Austausch) des Zifferblattes ist es besonders günstig, wenn die Halterungen jeweils lösbar sind.

Vorteilhaft sind die Verbindungsstellen für das Zifferblatt im Bereich einer oder mehrerer Zeigerdurchtrittsöffnungen und/oder in dem oder den Außenbereichen des Einzelzifferblattes oder mindestens eines der mehreren Einzelzifferblätter angeordnet. So können zum einen bereits vorhandene Körperkanten für Halterungen genutzt werden und zum anderen bleibt die zu beobachtende Anzeigefläche des Zifferblattes frei von störenden Verbindungselementen.

In bevorzugter Ausführungsform sind die Befestigungselemente für das Zifferblatt Schrauben, Niete, Haken, kerbnagelförmige Bauteile oder Ringe. Es ist sehr gut vorstellbar, daß die Befestigungselemente Skalenelemente sind und so die Bedruckung des Zifferblattes ersetzen oder ergänzen können. Dafür können die Befestigungselemente mit einer Bedruckung, einer Beschichtung und/oder angeformten Markierungs- und/oder Gestaltungselementen versehen sein. Die Befestigungselemente können so auch einer verschönernden optischen Gestaltung (z. B. Verchromung, Lackierung, Sonderformen) dienen. Besonders vorteilhaft weist oder weisen die Bedruckung, die Beschichtung oder die Markierungselemente eine Orientierung und Ablesung vereinfachende Ziffern, Buchstaben, Skalenstriche, Skalenpunkte oder Symbole auf.

Besonders vorteilhaft weist das Zifferblatt zumindest einen Bereich mit Skalenelementen, z. B. Tachometer und Tankuhr, und zumindest einen Bereich mit Signalfeldern, z. B. Fernlichtkontrolle und Kühlwassertemperaturwarnanzeige, auf.

Die Erfindung wird im folgenden anhand von in den beigefügten Zeichnungen dargestellten Ausführungsbeispielen näher erläutert.

Es zeigt:
- Figur 1: eine geschnittene Teilansicht eines ersten erfindungsgemäßen Anzeigeinstruments.
- Figur 2: eine geschnittene Teilansicht eines zweiten erfindungsgemäßen Anzeigeinstruments und
- Figur 3: eine geschnittene Teilansicht eines dritten erfindungsgemäßen Anzeigeinstruments.

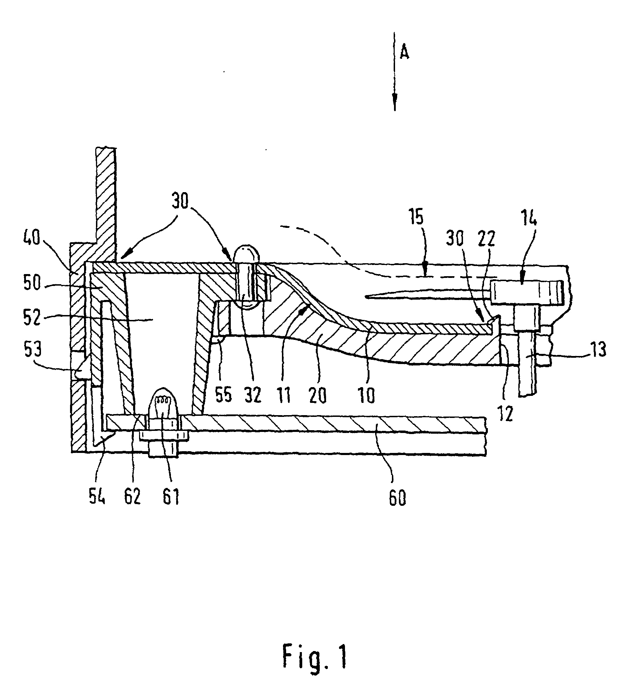

Das in Figur 1 dargestellte Anzeigeinstrument weist ein Mittelgehäuse 50, an dem ein Frontrahmen 40 und eine Leiterplatte 60 befestigt sind, auf. Die Verbindung zwischen Mittelgehäuse 50 und Frontrahmen 40 ist mittels Hakenelement 53 und die Verbindung zwischen Mittelgehäuse 50 und Leiterplatte 60 ist mittels Hakenelement 54 hergestellt.

Ein mit einer Wölbung 11 versehenes Zifferblatt 10, das von einem Beobachter in Beobachtungsrichtung A betrachtet wird, ist an einem Formbauteil 20 in Anlage. Das Formbauteil 20 ist als Lichtleiter ausgebildet, eine Lichteinführung in den Lichtleiter geschieht in bekannter Weise und ist hier nicht dargestellt. In dem Ausführungsbeispiel nach Figur 1 ist das Formbauteil 20 als Vollbauteil gezeigt, es kann aber auch z.B. in der Form eines Wagenrades durchbrochen sein.

Eine Zeigerwelle 13 eines in Richtung eines Beobachters vor dem Zifferblatt angeordneten Zeigers 14 ist durch eine Zeigerdurchtrittsöffnung 12 durch das Formbauteil 20 und das Zifferblatt 10 hindurchgeführt. Das Zifferblatt 10 besteht aus einem Kunststoff, z.B. Polycarbonat, und besitzt einen durchleuchtenden Bereich 15. An Verbindungsstellen 30 wird das Zifferblatt 10 gehalten. Dazu ist es zwischen Mittelgehäuse 50 und Frontrahmen 40 eingeklemmt, mittels eines Niets 32 mit dem Mittelgehäuse 50 und mittels eines Hakenelements 22 mit dem Formbauteil 20 verbunden. Das Formbauteil 20 wird von einem Hakenelement 55 an dem Mittelgehäuse gehalten.

Zum Erleuchten hier nicht dargestellter Anzeigeelemente auf dem Zifferblatt ist in der Leiterplatte 60 eine Lichtquelle 61 vorgesehen. Das von dieser Lichtquelle 61 ausgesandte Licht wird über einen konischen Lichtschacht 52 das Mittelgehäuse 50 überbrückend dem Zifferblatt zugeleitet. Zu einer verstärkten Lichtausbeute der Lichtquelle 61 ist diese so eingebaut, daß - sie umgebend - auf der Leiterplatte eine zur Lichtquelle senkrechte, ebene Fläche 62 vorhanden ist.

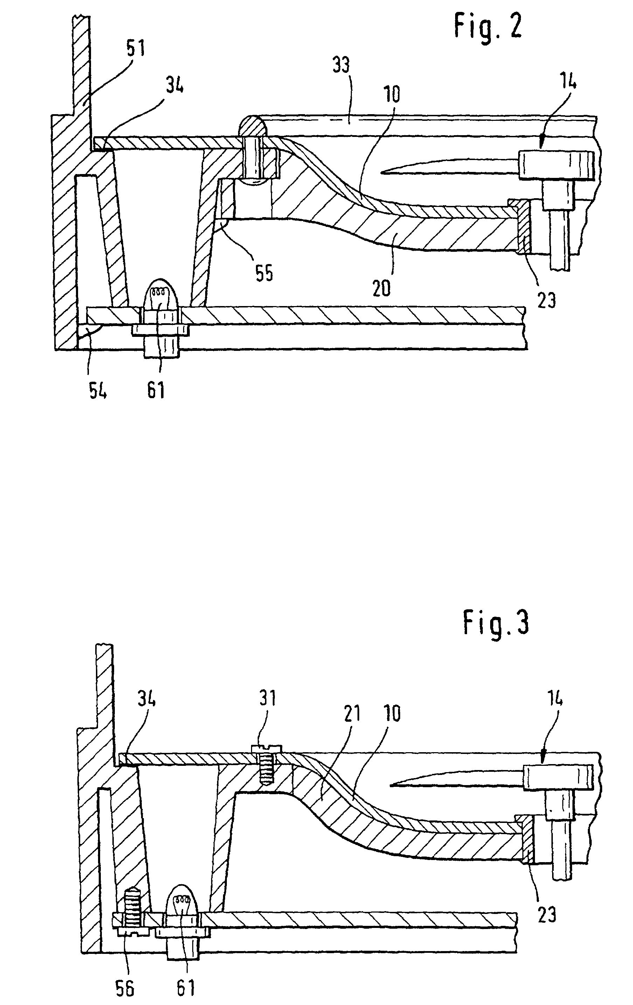

Ein zweites Ausführungsbeispiel eines Anzeigeinstruments zeigt Figur 2. Entsprechende Bauteile sind dabei mit gleichen Bezugszeichen versehen. Mittelgehäuse und Frontrahmen sind hier ein einziges Bauteil 51 bildend ausgeführt. An diesem Bauteil 51 ist mittels eines Hakenelementes 54 eine eine Lichtquelle 61 tragende Leiterplatte befestigt. Ein mittels eines Hakenelementes 55 gehaltenes Formbauteil 20 hält ein Zifferblatt 10 in Form. Dazu sind das Formbauteil 20 und das Zifferblatt 10 über ein Haltebauteil 23 im Bereich einer Zeigerdurchtrittsöffnung einer Zeigerwelle eines Zeigers 14 verbunden. Durch den Einsatz eines nicht lichtleitenden Haltebauteils 23 wird ein unerwünschter Lichthof im Bereich der Zeigerdurchtrittsöffnung vermieden. Eine sonst zur Abdeckung des Lichthofs verhältnismäßig groß auszuführende Zeigerkappe kann in diesem Fall ästhetisch ansprechender klein gehalten werden. Ein mit dem Bauteil 51 vernieteter Ring 33 hält das Zifferblatt 10 in dessen Außenbereich und ist gleichzeitig ästhetisches Gestaltungselement. Eine Klebung 34 verbindet das Zifferblatt 10 in seinen äußersten Bereichen mit dem Bauteil 51. Diese Klebung 34 muß nur in sehr wenigen Abschnitten angebracht sein, da sie lediglich zur Verhinderung von in ungünstigen Fällen möglicherweise auftretenden Schwingungen des Zifferblatts dient. Wenn die Distanz zu den benachbarten Befestigungsstellen (in diesem Fall vernieteter Ring 33) nicht zu groß ist, kann der Rand des Zifferblatts 10 auch frei bleiben, ohne daß eine Gefahr unerwünschter Schwingungen auftritt.

Figur 3 zeigt eine weitere beispielhafte Ausführungsform eines Anzeigeinstruments, wobei auch hier entsprechende Bauteile mit gleichen Bezugszeichen versehen sind.

Dieses Anzeigeinstrument ist in seinem Aufbau besonders einfach und besteht aus nur sehr wenigen Einzelteilen, da hier ein Bauteil 21 Formbauteil und Mittelgehäuse vereint, wobei daran auch ein Frontrahmen angeformt ist. Um im Bereich eines Zeigers 14 ein Zifferblatt 10 durchleuchten zu können, besteht das Bauteil 21 aus verschiedenen Materialien. Lichtleitende Materialien werden dort eingesetzt, wo eine Durchleuchtung des Zifferblatts 10 erwünscht wird. Umgekehrt ist es aber auch denkbar, nicht lichtleitende Materialien mit Freiflächen an zu beleuchtenden Feldern des Zifferblattes zu versehen, um eine Beleuchtung mit dahinterliegenden Lichtquellen zu ermöglichen.

Das Zifferblatt 10 ist mittels eines Haltebauteils 23, einer Schraube 31 sowie einer Klebung 34 in beispielhafter Weise mit dem Bauteil 21 verbunden. Eine eine Lichtquelle 61 tragende Leiterplatte ist mittels einer Schraube 56 an das Bauteil 21 angeschraubt.

## Patentansprüche

1. Anzeigeinstrument, insbesondere für Fahrzeuge, mit einem Gehäuse und mit einem Zifferblatt, das eine durch plastische Verformung erzeugte Wölbung aufweist, **dadurch gekennzeichnet, daß** das Zifferblatt (10) mit seiner dem Beobachter abgewandten Seite an einem entsprechend der Form des Zifferblattes ausgebildeten Formbauteil (20) in Anlage ist, wobei das Zifferblatt an einer oder mehreren Verbindungsstellen (30) mit dem Formbauteil verbunden ist.

2. Anzeigeinstrument nach Anspruch 1, **dadurch gekennzeichnet, daß** das Zifferblatt (10) ein einziges Einzelzifferblatt oder mehrere miteinander verbundene Einzelzifferblätter aufweist.

3. Anzeigeinstrument nach Anspruch 2, **dadurch gekennzeichnet, daß** mindestens eines der mehreren Einzelzifferblätter eine Wölbung (11) aufweist.

4. Anzeigeinstrument nach einem der vorhergehenden Ansprüche, **dadurch gekennzeichnet, daß** das Zifferblatt (10) zumindest teilweise aus Metall besteht.

5. Anzeigeinstrument nach einem der Ansprüche 1 bis 3, **dadurch gekennzeichnet, daß** das Zifferblatt (10) aus Kunststoff besteht.

6. Anzeigeinstrument nach einem der vorhergehenden Ansprüche, **dadurch gekennzeichnet, daß** das Formbauteil (20) ein Lichtleiter ist.

7. Anzeigeinstrument nach Anspruch 6, **dadurch gekennzeichnet, daß** das Formbauteil (20) ein Verbundbauteil ist, das in Teilbereichen ein Lichtleiter ist.

8. Anzeigeinstrument nach einem der vorhergehenden Ansprüche, **dadurch gekennzeichnet, daß** das Formbauteil (20) das Zifferblatt (10) ganz oder weitgehend überdeckt.

9. Anzeigeinstrument nach einem der Ansprüche 1 bis 7, **dadurch gekennzeichnet, daß** das Formbauteil (20) das Zifferblatt (10) in wenigen Teilbereichen überdeckt.

10. Anzeigeinstrument nach Anspruch 9, **dadurch gekennzeichnet, daß** das Formbauteil (20) das Zifferblatt (10) in den Bereichen überdeckt, in denen das Zifferblatt (10) aus einer Ebene in eine andere Ebene verformt ist.

11. Anzeigeinstrument nach einem der vorhergehenden Ansprüche, **dadurch gekennzeichnet, daß** das Formbauteil (20) flächig geschlossen ist.

12. Anzeigeinstrument nach einem der Ansprüche 1 bis 10, **dadurch gekennzeichnet, daß** das Formbauteil (20) netzartig durchbrochen ist.

13. Anzeigeinstrument nach einem der vorhergehenden Ansprüche, **dadurch gekennzeichnet, daß** beobachterseitig vor dem Zifferblatt (10) ein Deckglas angeordnet ist.

14. Anzeigeinstrument nach einem der vorhergehenden Ansprüche, **dadurch gekennzeichnet, daß** das Zifferblatt (10) zumindest partiell durchleuchtbar ist.

15. Anzeigeinstrument nach einem der vorhergehenden Ansprüche, **dadurch gekennzeichnet, daß** das Anzeigeinstrument ein Mittelgehäuse (50) und einen Frontrahmen (40) aufweist.

16. Anzeigeinstrument nach Anspruch 15, **dadurch gekennzeichnet, daß** das Zifferblatt (10) zwischen dem Mittelgehäuse (50) und dem Frontrahmen (40) klemmend befestigt ist.

17. Anzeigeinstrument nach einem der Ansprüche 15 oder 16, **dadurch gekennzeichnet, daß** das Mittelgehäuse (50) und der Frontrahmen (40) ein einziges Bauteil (51) bildend miteinander verbunden sind.

18. Anzeigeinstrument nach einem der Ansprüche 15 bis 17, **dadurch gekennzeichnet, daß** das Mittelgehäuse (50) und das Formbauteil (20) ein einziges Bauteil (21) bildend miteinander verbunden sind.

19. Anzeigeinstrument nach einem der vorhergehenden Ansprüche, **dadurch gekennzeichnet, daß** das Zifferblatt (10) mit dem Gehäuse oder Mittelgehäuse (50) und/oder mit dem Formbauteil (20) zumindest punktuell verklebt oder verschweißt ist.

20. Anzeigeinstrument nach einem der vorhergehenden Ansprüche, **dadurch gekennzeichnet, daß** das Zifferblatt (10) mit Befestigungselementen an den Verbindungsstellen (30) gehalten ist.

21. Anzeigeinstrument nach Anspruch 20, **dadurch gekennzeichnet, daß** das Zifferblatt (10) an das Formbauteil (20) und/oder an das Gehäuse oder Mittelgehäuse (50) angenietet und/oder angeschraubt ist.

22. Anzeigeinstrument nach einem der Ansprüche 20 oder 21, **dadurch gekennzeichnet, daß** das Zifferblatt (10) mittels zumindest eines an dem Formbauteil (20) ausgebildeten Hakenelementes (22) formschlüssig an dem Formbauteil (20) gehalten wird.

23. Anzeigeinstrument nach einem der Ansprüche 20 bis 22, **dadurch gekennzeichnet, daß** das Zifferblatt (10) mittels eines eingesetzten Haltebauteiles (23) form- und/oder kraftschlüssig an dem Formbauteil (20) gehalten wird.

24. Anzeigeinstrument nach einem der Ansprüche 20 bis 23, **dadurch gekennzeichnet, daß** die Halterung lösbar ist.

25. Anzeigeinstrument nach einem der vorhergehenden Ansprüche, **dadurch gekennzeichnet, daß** die Verbindungsstellen für das Zifferblatt (10) im Bereich einer oder mehrerer Zeigerdurchtrittsöffnungen (12) und/oder in dem oder den Außenbereichen des Einzelzifferblattes oder mindestens eines der mehreren Einzelzifferblätter angeordnet sind.

26. Anzeigeinstrument nach einem der Ansprüche 20 bis 25, **dadurch gekennzeichnet, daß** die Befestigungselemente für das Zifferblatt (10) Schrauben (31), Niete (32), Haken, kerbnagelförmige Bauteile oder Ringe (33) sind.

27. Anzeigeinstrument nach einem der Ansprüche 20 bis 26, **dadurch gekennzeichnet, daß** die Befestigungselemente Skalenelemente sind.

28. Anzeigeinstrument nach einem der Ansprüche 20 bis 27, **dadurch gekennzeichnet, daß** die Befestigungselemente mit einer Bedruckung, einer Beschichtung und/oder angeformten Markierungs- und/oder Gestaltungselementen versehen sind.

29. Anzeigeinstrument nach Anspruch 28, **dadurch gekennzeichnet, daß** die Bedruckung, die Beschichtung oder die Markierungselemente Ziffern, Buchstaben, Skalenstriche, Skalenpunkte oder Symbole aufweist oder aufweisen.

30. Anzeigeinstrument nach einem der vorhergehenden Ansprüche, **dadurch gekennzeichnet, daß** das Zifferblatt (10) zumindest einen Bereich mit Skalenelementen und zumindest einen Bereich mit Signalfeldern aufweist.

## Claims

1. Indicating instrument, in particular for vehicles, having a housing and having a dial, which has a curvature produced by plastic deformation, **characterized in that** the dial (10) rests with its side facing away from the observer on a shaped component (20), which is formed in a manner such that it corresponds to the shape of the dial, the dial being connected to the shaped component at one or more connecting points (30).

2. Indicating instrument according to Claim 1, **characterized in that** the dial (10) has a single individual dial or a plurality of individual dials which are connected to one another.

3. Indicating instrument according to Claim 2, **characterized in that** at least one of the plurality of individual dials has a curvature (11).

4. Indicating instrument according to one of the preceding claims, **characterized in that** the dial (10) consists at least partially of metal.

5. Indicating instrument according to one of Claims 1 to 3, **characterized in that** the dial (10) consists of plastic.

6. Indicating instrument according to one of the preceding claims, **characterized in that** the shaped component (20) is a light guide.

7. Indicating instrument according to Claim 6, **characterized in that** the shaped component (20) is a composite component which, in subregions, is a light guide.

8. Indicating instrument according to one of the preceding claims, **characterized in that** the shaped component (20) entirely or largely covers the dial (10).

9. Indicating instrument according to one of Claims 1 to 7, **characterized in that** the shaped component (20) covers the dial (10) in just a few subregions.

10. Indicating instrument according to Claim 9, **characterized in that** the shaped component (20) covers the dial (10) in the regions in which the dial (10) is deformed from one plane into another plane.

11. Indicating instrument according to one of the preceding claims, **characterized in that** the shaped component (20) is closed in a sheet-like manner.

12. Indicating instrument according to one of Claims 1 to 10, **characterized in that** the shaped component (20) is perforated in a net-like manner.

13. Indicating instrument according to one of the preceding claims, **characterized in that** a covering glass is arranged in front of the dial (10) on the observer's side.

14. Indicating instrument according to one of the preceding claims, **characterized in that** the dial (10) can at least partially be lit up.

15. Indicating instrument according to one of the preceding claims, **characterized in that** the indicating instrument has a central housing (50) and a front frame (40).

16. Indicating instrument according to Claim 15, **characterized in that** the dial (10) is clamped between the central housing (50) and the front frame (40).

17. Indicating instrument according to either of Claims 15 and 16, **characterized in that** the central housing (50) and the front frame (40) are connected to each other forming a single component (51).

18. Indicating instrument according to one of Claims 15 to 17, **characterized in that** the central housing (50) and the shaped component (20) are connected to each other forming a single component (21).

19. Indicating instrument according to one of the preceding claims, **characterized in that** the dial (10) is bonded or welded to the housing or central housing (50) and/or to the shaped component (20) at least in a pointwise manner.

20. Indicating instrument according to one of the preceding claims, **characterized in that** the dial (10) is retained at the connecting points (30) by fastening elements.

21. Indicating instrument according to Claim 20, **characterized in that** the dial (10) is riveted and/or screwed onto the shaped component (20) and/or onto the housing or central housing (50).

22. Indicating instrument according to either of Claims 20 and 21, **characterized in that** the dial (10) is retained in a form-fitting manner on the shaped component (20) by means of at least one hook element (22), which is formed on the shaped component (20).

23. Indicating instrument according to one of Claims 20 to 22, **characterized in that** the dial (10) is retained in a form-fitting and/or frictional manner on the shaped component (20) by means of an inserted retaining component (23).

24. Indicating instrument according to one of Claims 20 to 23, **characterized in that** the securing means can be released.

25. Indicating instrument according to one of the preceding claims, **characterized in that** the connecting points for the dial (10) are arranged in the region of one or more pointer passage openings (12) and/or in the outer region or outer regions of the individual dial or at least of one of the plurality of individual dials.

26. Indicating instrument according to one of Claims 20 to 25, **characterized in that** the fastening elements for the dial (10) are screws (31), rivets (32), hooks, components in the form of grooved nails, or rings (33).

27. Indicating instrument according to one of Claims 20 to 26, **characterized in that** the fastening elements are scale elements.

28. Indicating instrument according to one of Claims 20 to 27, **characterized in that** the fastening elements are provided with an imprint, a coating and/or integrally formed marking and/or design elements.

29. Indicating instrument according to Claim 28, **characterized in that** the imprint, the coating or the marking elements has or have numbers, letters, scale graduation marks, scale points or symbols.

30. Indicating instrument according to one of the preceding claims, **characterized in that** the dial (10) has at least one region with scale elements and at least one region with signal areas.

## Revendications

1. Instrument indicateur, notamment pour véhicules, comportant un boîtier et un cadran comportant un bombement généré par une déformation plastique, **caractérisé en ce que** la face du cadran (10) opposée à l'observateur est adjacente à un élément de conformation (20) de forme correspondante à celle du cadran, le cadran étant relié à l'élément de conformation en un ou plusieurs points de liaison (30).

2. Instrument indicateur selon la revendication 1, **caractérisé en ce que** le cadran (10) comporte un cadran individuel unique ou plusieurs cadrans individuels reliés entre eux.

3. Instrument indicateur selon la revendication 2, **caractérisé en ce qu'**au moins l'un des plusieurs cadrans individuels comporte un bombement (11).

4. Instrument indicateur selon l'une des revendications précédentes, **caractérisé en ce que** le cadran (10) est constitué au moins en partie de métal.

5. Instrument indicateur selon l'une des revendications 1 à 3, **caractérisé en ce que** le cadran (10) est constitué de matière plastique.

6. Instrument indicateur selon l'une des revendications précédentes, **caractérisé en ce que** l'élément de conformation (20) est un conducteur de lumière.

7. Instrument indicateur selon la revendication 6, **caractérisé en ce que** l'élément de conformation (20) est un élément composite constituant en partie un conducteur de lumière.

8. Instrument indicateur selon l'une des revendications précédentes, **caractérisé en ce que** l'élément de conformation (20) couvre le cadran (10) totalement ou en grande partie.

9. Instrument indicateur selon l'une des revendications 1 à 7, **caractérisé en ce que** l'élément de conformation (20) couvre le cadran (10) dans un petit nombre de zones partielles.

10. Instrument indicateur selon la revendication 9, **caractérisé en ce que** l'élément de conformation (20) couvre les parties du cadran (10) où le cadran (10) est déformé d'un plan à un autre plan.

11. Instrument indicateur selon l'une des revendications précédentes, **caractérisé en ce que** l'élément de conformation (20) est en nappe fermée.

12. Instrument indicateur selon l'une des revendications 1 à 10, **caractérisé en ce que** l'élément de conformation est ajouré et réticulé.

13. Instrument indicateur selon l'une des revendications précédentes, **caractérisé en ce que**, du côté de l'observateur, un verre de couverture est disposé devant le cadran (10).

14. Instrument indicateur selon l'une des revendications précédentes, **caractérisé en ce que** le cadran (10) peut être illuminé par transmission au moins partiellement.

15. Instrument indicateur selon l'une des revendications précédentes, **caractérisé en ce que** l'instrument indicateur comporte un boîtier médian (50) et un cadre frontal (40).

16. Instrument indicateur selon la revendication 15, **caractérisé en ce que** le cadran (10) est pincé entre le boîtier médian (50) et le cadre frontal (40).

17. Instrument indicateur selon la revendication 15 ou 16, **caractérisé en ce que** le boîtier médian (50) et le cadre frontal (40) sont reliés entre eux en formant un seul et unique élément (51).

18. Instrument indicateur selon l'une des revendications 15 à 17, **caractérisé en ce que** le boîtier médian (50) et l'élément de conformation (20) sont reliés entre eux en formant un seul et unique élément (21).

19. Instrument indicateur selon l'une des revendications précédentes, **caractérisé en ce que** le cadran (10) est au moins ponctuellement collé ou soudé avec le boîtier ou le boîtier médian (50) et / ou avec l'élément de conformation (20).

20. Instrument indicateur selon l'une des revendications précédentes, **caractérisé en ce que** le cadran (10) est maintenu aux points de liaison (30) par des éléments de fixation.

21. Instrument indicateur selon la revendication 20, **caractérisé en ce que** le cadran (10) est rivé et / ou vissé sur l'élément de conformation (20) et / ou ur le boîtier ou le boîtier médian (50).

22. Instrument indicateur selon la revendication 20 ou 21, **caractérisé en ce que** le cadran (10) est maintenu par liaison positive avec l'élément de conformation (20) au moyen d'au moins un éléments d'accrochage (22) formé sur l'élément de conformation (20).

23. Instrument indicateur selon l'une des revendications 20 à 22, **caractérisé en ce que** le cadran (10) est maintenu par une liaison positive et / ou à force avec l'élément de conformation (20) au moyen d'un élément de maintien (23) enfiché.

24. Instrument indicateur selon l'une des revendications 20 à 23, **caractérisé en ce que** la fixation/maintien est amovible.

25. Instrument indicateur selon l'une des revendications précédente, **caractérisé en ce que** les points de liaison pour le cadran (10) sont agencées dans la zone d'une ou de plusieurs ouvertures (12) de passage d'aiguille et / ou dans la zone extérieure du cadran individuel ou de l'un au moins des cadrans individuels.

26. Instrument indicateur selon l'une des revendications 20 à 25, **caractérisé en ce que** les éléments de fixation pour le cadran (10) sont des vis (31), des rivets (32), des crochets, des éléments en forme de clou cannelé ou des anneaux (33).

27. Instrument indicateur selon l'une des revendications 20 à 26, **caractérisé en ce que** les éléments de fixation sont des éléments de graduation.

28. Instrument indicateur selon l'une des revendications 20 à 27, **caractérisé en ce que** les éléments de fixation sont munis d'une impression, d'un revêtement et / ou d'éléments de repère et / ou d'éléments de structure venus de matière.

29. Instrument indicateur selon la revendication 28, **caractérisé en ce que** l'impression, le revêtement ou les éléments de repère comporte ou comportent des chiffres, des lettres, des traits de graduation, des points de graduation ou des symboles.

30. Instrument indicateur selon l'une des revendications précédentes, **caractérisé en ce que** le cadran (10) comporte au moins une zone comprenant des éléments de graduation et au moins une zone comprenant des champs de signalisation.
